# FASCICULE DE BREVET EUROPEEN

(11) **EP 3 624 967 B1**
(45) Date de publication et mention de la délivrance du brevet: **05.05.2021**
(21) Numéro de dépôt: 18723036.2
(22) Date de dépôt: 16.05.2018
(51) Int. Cl.: B22F 3/105, B22F 5/00, B22F 5/04, F01D 9/00, B33Y 10/00, B33Y 30/00, F01D 9/02, F01D 9/04, B33Y 80/00, B33Y 40/00

(54) **AUBE DE TURBOMACHINE D'AERONEF ET SON PROCEDE DE REALISATION PAR FABRICATION ADDITIVE**
FLUGZEUGTURBOMASCHINENSCHAUFEL UND DEREN HERSTELLUNG MITTELS GENERATIVER FERTIGUNG
AIRCRAFT TURBOMACHINE VANE AND ITS METHOD OF FABRICATION USING ADDITIVE MANUFACTURING

(30) Priorité: 19.05.2017 FR 1754446
(43) Date de publication de la demande: 25.03.2020
(73) Titulaire: Safran Aircraft Engines, 75015 Paris (FR)
(72) Inventeur: VOIRON, Mickaël, 77550 Moissy-Cramayel (FR)
(74) Mandataire: Gevers & Orès
(86) Numéro de dépôt international: PCT/EP2018/062794
(87) Numéro de publication internationale: WO 2018/210957

(56) Documents cités:
- WO-A1-2012/001324
- WO-A1-2017/085383
- FR-A1- 3 002 167
- US-A1- 2004 031 780

## Description

### DOMAINE TECHNIQUE

La présente invention concerne un procédé de réalisation par fabrication additive d'une aube de turbomachine d'aéronef, qui peut faire partie d'un secteur de distributeur ou de redresseur de turbomachine d'aéronef.

### ETAT DE L'ART

L'état de l'art comprend notamment les documents FR-A1-2 991 613, FR-A1-3 030 323, WO-A1 -2012/001324, US-A1-2004/031780 et FR-A1-3 002 167.

Un secteur de distributeur de turbomachine comporte deux parois circonférentielles, respectivement supérieure et inférieure, entre lesquelles s'étendent des pales comportant chacune un bord d'attaque et un bord de fuite s'étendant entre les parois. Les bords d'attaque des pales sont situés du côté de premiers bords circonférentiels des parois et peuvent être au moins en partie en retrait vis-à-vis de ces bords circonférentiels. De la même façon, les bords de fuite des pales sont situés du côté de seconds bords circonférentiels des parois et peuvent être au moins en partie en retrait vis-à-vis de ces bords circonférentiels.

Dans le cas où un tel secteur de distributeur serait réalisé par fabrication additive, par fusion laser sur lits de poudre, le distributeur serait réalisé sur un plateau support de sorte que soit les premiers bords circonférentiels soit les seconds bords circonférentiels seraient fabriqués en premier directement sur le plateau support. Dans un tel cas, du fait du retrait précité, un jeu existerait entre tout ou partie du bord d'attaque ou de fuite de chaque pale et le plateau support. Pour éviter un tel jeu, susceptible d'entraîner un affaissement de la matière en cours de fabrication, il serait possible d'utiliser des organes de soutien provisoire des pales. Ces organes seraient réalisés simultanément aux premiers ou seconds bords, au niveau des pales, et s'étendraient entre le plateau de support et les bords d'attaque ou de fuite des pales.

Cependant, ces organes de soutien devraient être supprimés après la fabrication. Se pose donc la question de leur suppression, par une technique la plus simple possible, sans risque de détérioration des pales et du secteur de distributeur. Une solution consistant à utiliser une pince pour saisir chaque organe de support, le désolidariser de la pale correspondante en effectuant des mouvements de va-et-vient, puis le retirer au moyen de la pince, serait envisageable. Cependant, le geste de l'opérateur ne serait pas précis et, du fait de la géométie de l'organe et de sa faible rigidité, il risquerait de se déformer sous l'effort appliqué par la pince, rendant plus diffcile son retrait.

L'invention propose une solution simple, efficace et économique à au moins une partie de ces problèmes.

### EXPOSE DE L'INVENTION

L'invention propose un procédé de réalisation par fabrication additive d'au moins une aube (c'est-à-dire de tout élément à profil aérodynamique), de turbomachine d'aéronef, cette aube comportant deux parois circonférentielles, respectivement supérieure et inférieure, entre lesquelles s'étendent au moins une pale comportant chacune un bord d'attaque et un bord de fuite s'étendant entre lesdites parois et au moins en partie en retrait vis-à-vis respectivement de premiers et seconds bords circonférentiels desdites parois, le procédé comprenant :
- une étape de fabrication additive par fusion laser sur lits de poudre de ladite aube, la fabrication étant réalisée sur un plateau support de sorte que lesdits premiers ou seconds bords circonférentiels soient fabriqués en premier directement sur ledit plateau support, au moins un organe de soutien provisoire étant réalisé simultanément auxdits premiers ou seconds bords, au niveau de ladite ou de chaque pale, et s'étendant entre ledit plateau de support et ledit bords d'attaque ou de fuite de la pale, et
- une étape de retrait dudit ou de chaque organe de soutien organes de soutien en rompant sa liaison avec le bord d'attaque ou de fuite associé, caractérisé en ce que le retrait est réalisé au moyen d'un outil dont au moins une extrémité est engagée dans au moins un évidement dudit ou de chaque organe de soutien, et qui est déplacé par pivotement dans un plan sensiblement perpendiculaire au bord d'attaque ou de fuite associé.

L'invention peut s'appliquer à une aube seule, c'est-à-dire isolée, ou alors à une série d'aubes formant un ensemble monobloc appelé secteur. Le secteur peut être un secteur de redresseur (pour un compresseur) ou de distributeur (pour une turbine).

L'invention permet de résoudre le problème précité. Elle permet en effet de rigidifier l'organe de support mais aussi de rendre son opération de retrait plus facile, plus rapide et également moins contraignante pour l'opérateur. Un des problèmes était le manque de rigidité, les parois de l'organe risquant de s'effondrer sous l'action de la pince. La présence et la conformation de l'évidement permettent de simplifier la forme de l'organe, qui est ainsi rigidifié.

Le procédé selon l'invention peut comprendre une ou plusieurs des caractéristiques ou étapes ci-dessous, prises isolément les unes des autres ou en combinaison les unes avec les autres :
- ledit outil est un tournevis, de préférence à extrémité ou tête plate,
- chaque organe comprend un à trois évidements voire plus. Le nombre d'évidements dépend par exemple de la surface de contact entre l'organe de support et la pale,
- chaque organe peut comprendre un évidement principal et deux évidements secondaires disposés sur deux côtés opposés de l'évidement principal,
- ledit évidement principal est délimité par des parois plus épaisses que celles délimitant les évidements secondaires ; ceci permet à l'organe d'avoir suffisamment de résistance lorsqu'une force de retrait est exercée,
- le procédé est appliqué à une série d'aubes appartenant à un même secteur de distributeur ou de redresseur.

La présente invention concerne également une aube de turbomachine d'aéronef réalisée par le procédé tel que décrit ci-dessus, ladite aube comportant deux parois circonférentielles, respectivement supérieure et inférieure, entre lesquelles s'étendent au moins une pale comportant chacune un bord d'attaque et un bord de fuite s'étendant entre lesdites parois et au moins en partie en retrait vis-à-vis respectivement de premiers et seconds bords circonférentiels desdites parois, au moins un organe de soutien provisoire étant situé au niveau du bord d'attaque ou de fuite de ladite ou de chaque pale, et s'étendant entre un plan passant par lesdits premiers ou seconds bords et ledit bord d'attaque ou de fuite de ladite ou de chaque pale, caractérisé en ce que ledit ou chaque organe de soutien comporte au moins un évidement configuré pour recevoir au moins une extrémité d'un outil, en vue du retrait par pivotement dudit organe.

L'aube selon l'invention peut comprendre une ou plusieurs des caractéristiques ou étapes ci-dessous, prises isolément les unes des autres ou en combinaison les unes avec les autres :
- chaque organe comprend un à trois évidements, voire plus,
- le ou chaque évidement est délimité par des parois transversales de renfort,
- chaque organe a une épaisseur qui varie entre une extrémité située du côté de la paroi inférieure, et une extrémité opposée située du côté de la paroi supérieure,
- chaque organe comprend au moins une cavité d'allègement ; ce type de cavité peut en outre permettre de réduire le temps de fusion et la consommation de poudre lors de la fabrication additive,
- chaque cavité d'allègement est délimitée par des parois latérales de l'organe qui comportent des encoches d'allègement,
- lesdites encoches d'allègement ont chacune une forme générale en V ; cette configuration peut permettre de faciliter l'évacuation de la poudre des cavités lors d'une opération de dépoudrage à la fin de l'opération de fabrication additive ; elle peut permettre également de réduire le temps de fusion et la consommation de poudre.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue très schématique d'une installation pour la fabrication additive d'un secteur de redresseur de compresseur,
- la figure 2 est une vue schématique en perspective d'un secteur de redresseur réalisé par fabrication additive, le redresseur étant conforme à l'invention,
- la figure 3 est une vue à plus grande échelle d'une partie du secteur de redresseur de la figure 2,
- les figures 4a à 4d sont des vues schématiques en perspective d'un secteur de redresseur et illustrent une étape manuelle de retrait des organes de soutien du redresseur, et
- la figure 5 est une vue correspondant à la figure 3 et représentant une variante de réalisation de l'invention.

### DESCRIPTION DETAILLEE

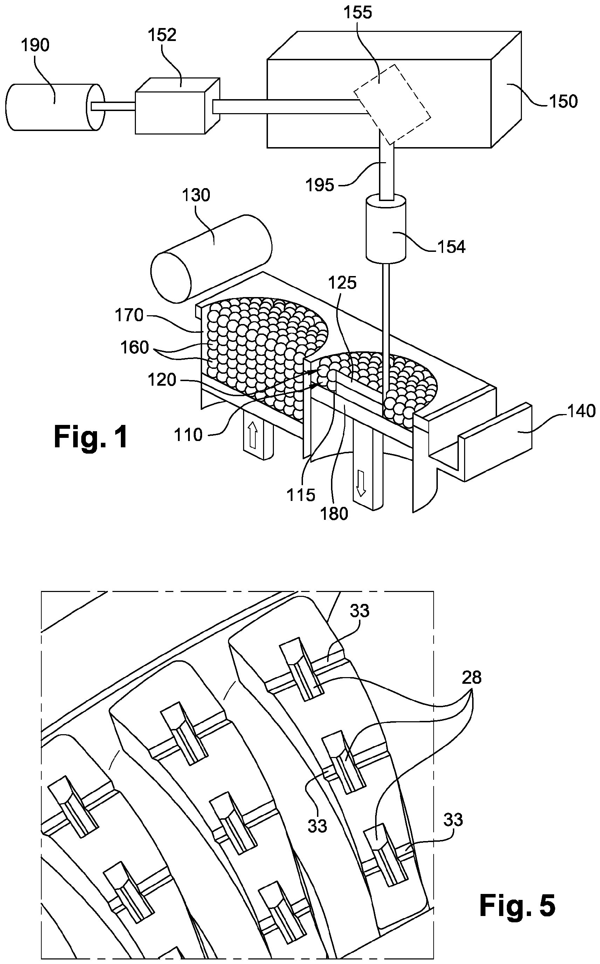

La figure 1 montre une installation de réalisation d'un secteur de redresseur par fabrication additive, et en particulier par fusion sélective de lits de poudre via un faisceau de haute énergie, tel qu'un faisceau laser.

La machine comprend un bac d'alimentation 170 contenant de la poudre d'un matériau tel qu'un alliage métallique, un rouleau 130 pour transvaser cette poudre depuis ce bac 170 et étaler une première couche 110 de cette poudre sur un plateau support de construction 180.

La machine comprend également un bac de recyclage 140 pour récupérer la poudre usagée (en particulier non fondue ou non frittée) et la poudre en excès (en majeure partie), après étalement de la couche de poudre sur le plateau support 180. Ainsi, la majeure partie de la poudre du bac de recyclage est composée de poudre neuve. Aussi, ce bac de recyclage 140 est communément appelé par la profession bac de trop plein ou cendrier.

Cette machine comprend également un générateur 190 de faisceau énergétique (par exemple laser) 195, et un système de pilotage 150 apte à diriger ce faisceau 195 sur n'importe quelle région du plateau support 180 de façon à balayer n'importe quelle région d'une couche de poudre. La mise en forme du faisceau énergétique (laser) et la variation de son diamètre sur le plan focal se font respectivement au moyen d'un dilatateur de faisceau 152 et d'un système de focalisation 154, l'ensemble constituant le système optique.

Cette machine pour appliquer le procédé assimilable à un procédé de dépôt direct de métal ou DMD (acronyme de l'anglais *Direct Metal Deposition*) sur une poudre peut utiliser n'importe quel faisceau de haute énergie en place du faisceau laser 195, tant que ce faisceau est suffisamment énergétique pour dans le premier cas fondre ou dans l'autre cas former des cols ou ponts entre les particules de poudre et une partie du matériau sur lequel les particules reposent.

Le rouleau 130 peut être remplacé par un autre système de dépose approprié, tel qu'un dévidoir (ou trémie) associé à une lame de raclage, à un couteau ou à une brosse, apte à transvaser et étaler la poudre en couche.

Le système de pilotage 150 comprend par exemple au moins un miroir 155 orientable sur lequel le faisceau laser 195 se réfléchit avant d'atteindre une couche de poudre dont chaque point de la surface se trouve située toujours à la même hauteur par rapport à la lentille de focalisation, contenue dans le système de focalisation 154, la position angulaire de ce miroir 155 étant pilotée par une tête galvanométrique pour que le faisceau laser balaye au moins une région de la première couche de poudre, et suive ainsi un profil de pièce pré-établi.

Cette machine fonctionne de la façon suivante. On dépose à l'aide du rouleau 130 une première couche 110 de poudre d'un matériau sur le plateau support 180, cette poudre étant transvasée depuis un bac d'alimentation 170 lors d'un mouvement aller du rouleau 130 puis elle est raclée, et éventuellement légèrement compactée, lors d'un (ou de plusieurs) mouvement(s) de retour du rouleau 130. L'excédent de poudre est récupéré dans le bac de recyclage 140. On porte une région de cette première couche 110 de poudre, par balayage avec le faisceau laser 195, à une température supérieure à la température de fusion de cette poudre (température de liquidus). La tête galvanométrique est commandée selon les informations contenues dans la base de données de l'outil informatique utilisé pour la conception et la fabrication assistées par ordinateur de la pièce à fabriquer. Ainsi, les particules de poudre 160 de cette région de la première couche 110 sont fondues et forment un premier cordon 115 d'un seul tenant, solidaire avec le plateau support 180. A ce stade, on peut également balayer avec le faisceau laser plusieurs régions indépendantes de cette première couche pour former, après fusion et solidification de la matière, plusieurs premiers cordons 115 disjoints les uns des autres. On abaisse le plateau support 180 d'une hauteur correspondant à l'épaisseur déjà définie de la première couche (entre 20 et 100 µm et en général de 30 à 50 µm). L'épaisseur de la couche de poudre à fusionner ou à consolider reste une valeur variable d'une couche à l'autre car elle est fort dépendante de la porosité du lit de poudre et de sa planéité alors que le déplacement pré-programmé du plateau support 180 est une valeur invariable au jeu près. On dépose ensuite une deuxième couche 120 de poudre sur la première couche 110 et sur ce premier cordon 115, puis on chauffe par exposition au faisceau laser 195 une région de la deuxième couche 120 qui est située partiellement ou complètement au-dessus de ce premier cordon 115, de telle sorte que les particules de poudre de cette région de la deuxième couche 120 sont fondues, avec au moins une partie du premier cordon 115, et forment un deuxième cordon d'un seul tenant ou consolidé 125, l'ensemble de ces deux cordons 115 et 125 formant un bloc d'un seul tenant. A cet effet, le deuxième cordon 125 est avantageusement déjà entièrement lié dès qu'une partie de ce deuxième cordon 125 se lie au premier organe 115. On comprend que selon le profil de la pièce à construire, et notamment dans le cas de surface en contre-dépouille, il se peut que la région précitée de la première couche 110 ne se trouve pas, même partiellement, en dessous de la région précitée de la deuxième couche 120, de sorte que dans ce cas le premier codon 115 et le deuxième cordon 125 ne forment alors pas un bloc d'un seul tenant. On poursuit ensuite ce processus de construction de la pièce couche par couche en ajoutant des couches supplémentaires de poudre sur l'ensemble déjà formé. Le balayage avec le faisceau 195 permet de construire chaque couche en lui donnant une forme en accord avec la géométrie de la pièce à réaliser, par exemple les structures en treillis précitées. Les couches inférieures de la pièce se refroidissent plus ou moins vite au fur et à mesure que les couches supérieures de la pièce se construisent.

Afin de diminuer la contamination de la pièce, par exemple en oxygène dissous, en oxyde(s) ou en un autre polluant lors de sa fabrication couche par couche telle que décrite ci-dessus, cette fabrication doit être effectuée dans une enceinte à degré d'hygrométrie contrôlée et adaptée au couple procédé/matériau, remplie d'un gaz neutre (non réactif) vis-à-vis du matériau considéré tel que l'azote (N2), l'argon (Ar) ou l'hélium (He) avec ou non addition d'une faible quantité d'hydrogène (H2) connu pour son pouvoir réducteur. Un mélange d'au moins deux de ces gaz peut être aussi considéré. Pour empêcher la contamination, notamment par l'oxygène du milieu environnant, il est d'usage de mettre cette enceinte en surpression.

Ainsi, la fusion sélective ou le frittage sélectif par laser permet de construire avec une bonne précision dimensionnelle des pièces faiblement polluées dont la géométrie en trois dimensions peut être complexe.

La fusion sélective ou le frittage sélectif par laser utilise en outre de préférence des poudres de morphologie sphérique, propres (c'est-à-dire non contaminées par des organes résiduels provenant de la synthèse), très fines (la dimension de chaque particule est comprise entre 1 et 100 µm et de préférence entre 45 et 90 µm), ce qui permet d'obtenir un excellent état de surface de la pièce finie.

La fusion sélective ou le frittage sélectif par laser permet par ailleurs une diminution des délais de fabrication, des coûts et des frais fixes, par rapport à une pièce moulée, injectée ou usinée dans la masse.

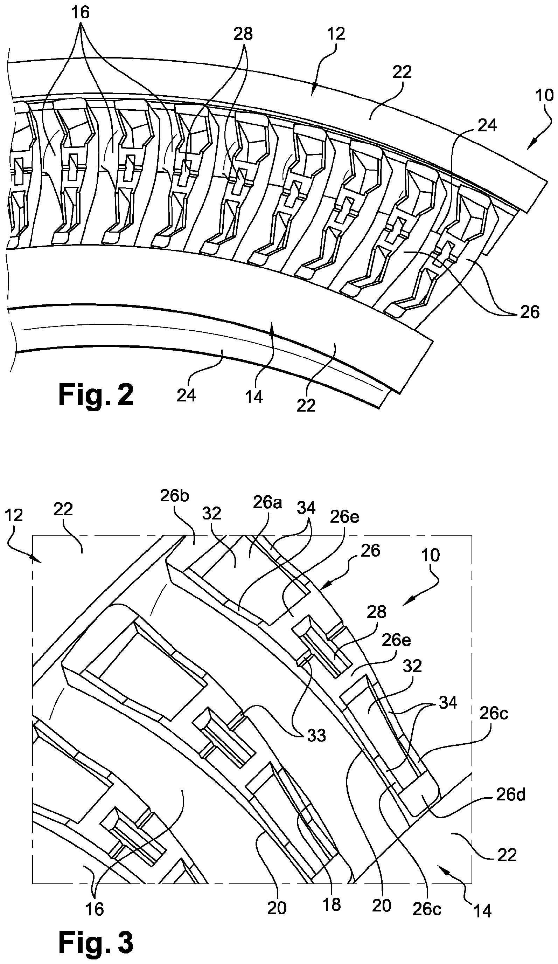

L'invention utilise la fabrication additive par fusion laser sur lits de poudre pour réaliser un secteur de redresseur 10 de turbomachine. La figure 2 représente un mode de réalisation de l'invention. Ce secteur de redresseur 10 comporte deux parois circonférentielles, respectivement supérieure 12 et inférieure 14, entre lesquelles s'étendent des pales 16 comportant chacune un bord d'attaque 18 et un bord de fuite 20 s'étendant entre les parois 12, 14 et au moins en partie en retrait vis-à-vis respectivement de premiers et seconds bords circonférentiels 22, 24 de ces parois. Des organes 26 de soutien provisoire sont situés au niveau des bords d'attaque 18 ou de fuite 20 des pales 16, et s'étendent entre un plan passant par les premiers ou seconds bords 22, 24 et les bords d'attaque 18 ou de fuite 20 des pales. Comme on le voit sur les dessins, chacun des organes de soutien 26 comporte au moins un évidement 28 configuré pour recevoir au moins une extrémité d'un outil 30 telle que l'extrémité libre d'un tournevis plat, en vue du retrait par pivotement de cet organe 26.

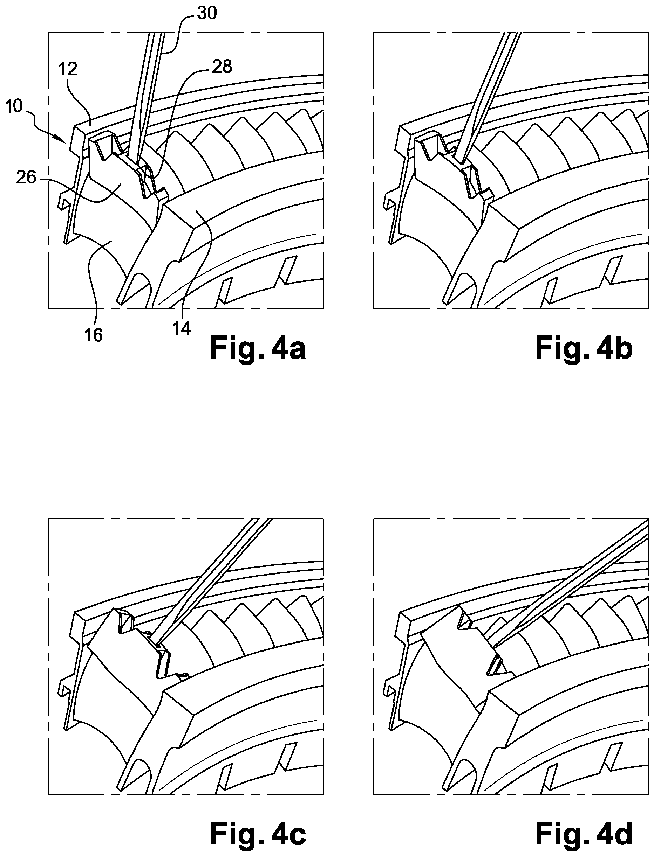

Dans l'exemple de réalisation des figures 2 à 4d, l'organe 26 comprend un évidement 28 mais il pourrait en comprendre plusieurs, comme trois dans la variante de réalisation de la figure 5.

Chaque organe 26 a une forme allongée et s'étend longitudinalement entre les parois 12, 14. Dans l'exemple représenté, son épaisseur transversale, située du côté de la paroi supérieure 12, est plus large que celle de son extrémité inférieure, située du côté de la paroi inférieure 14.

Chaque organe 26 comprend une paroi de fond 26a de forme allongée et s'étendant dans un plan sensiblement parallèle aux bords 22, 24, et reliées à des parois périphériques 26b, 26c, 26d sensiblement perpendiculaires à la paroi de fond 26a. La paroi supérieure 26b est située du côté de la paroi supérieure 12, la paroi inférieure 26d est située du côté de la paroi inférieure 14, et les parois latérales 26c s'étendent à distance l'une de l'autre, entre les parois 12 et 14.

L'évidement 28 est situé sensiblement au milieu de l'organe 26 et est délimité par les parois latérales 26c d'une part, et par deux parois transversales 26e de renfort d'autre part. Chaque évidement 28 a une forme allongée, le long de l'axe d'allongement de l'organe, et est conformé pour recevoir la pointe de l'outil 30. Entre l'évidement 28 et les parois 26b, 26d, l'organe comprend, entre les parois 26c, des cavités d'allègement 32. Les parois 26c comprennent, au niveau de ces cavités 32, des encoches d'allègement 34. Ces encoches ont ici une forme générale en V.

Les portions des parois 26c délimitant les évidements 28 sont surépaissies par rapport au reste de ces parois. Par ailleurs, ces portions de parois 26c comportent des encoches transversales 33 configurées pour faciliter le dépoudrage, c'est-à-dire l'évacuation de la poudre située dans l'évidement 28 en fin d'opération de fabrication additive. Les parois 26e sont en outre surépaissies en particulier par rapport au reste précité des parois 26c.

Dans le cas où les premiers bords 22, tels que les bords aval (par référence à l'écoulement des gaz dans la turbomachine), seraient réalisés en premier lors de la fabrication additive, on comprend que la face aval du redresseur serait la face inférieure qui serait au contact du plateau support 180 de la figure 1. Les bords de fuite des pales seraient orientés vers le plateau support 180.

Dans ce cas, les organes de soutien 26 sont réalisés simultanément aux bords 22, par fabrication additive, et assurent le support des pales 16 pour éviter leur affaissement. Ils sont ainsi destinés à s'étendre entre le plateau 180 et les bords de fuite des pales dans l'exemple représenté. Ils sont ici en appui par les parois 26b, 26c, 26d sur le plateau support 180, et reliés par continuité de matière aux pales 16, par leurs parois 26a.

Selon l'invention, le retrait de chaque organe de soutien 26 est réalisé au moyen de l'outil 30 dont au moins une extrémité est engagée dans l'évidement de chacun des organes de soutien 26, et qui est déplacé par pivotement dans un plan sensiblement perpendiculaire au bord d'attaque (ou de fuite) associé.

Les figures 4a à 4d illustrent des étapes de retrait d'un dernier organe 26 d'un secteur de redresseur 10, les autres organes ayant déjà été retirés. La pointe de l'outil 30 est insérée dans l'évidement 28 de l'organe 26 (figure 4a), puis l'outil 30 est déplacé par pivotement dans le plan précité jusqu'à obtenir une rupture de la matière entre le bord de fuite de la pale et l'organe 26 (figures 4b et 4c). L'organe est pivoté et soulevé au moyen de l'outil de façon à l'éloigner de la pale et le retirer de l'espace s'étendant entre les parois 12, 14 du secteur de redresseur.

Avec l'invention, le risque de déformation de l'organe 26 est limité. De plus, l'opération de retrait est facilitée, car elle est rapide et répétable en raison d'une mise en position précise de l'outil dans l'organe.

Dans le cas particulier de la variante de la figure 5, l'organe 26 comprend trois évidements 28 alignés dans un même plan parallèle à l'axe d'allongement de l'organe, et l'outil de retrait de ce type d'organe peut comprendre trois extrémités ou pointes destinées à être insérées respectivement dans les évidements de l'organe. Ceci permet de répartir les efforts de retrait de l'organe sur la longueur de ce dernier.

Bien que l'invention ait été illustrée en référence à un secteur de redresseur, elle s'applique à un secteur de distributeur. Dans l'exemple représenté, le secteur comprend plusieurs pales. En variante, il pourrait en comprendre qu'une seule, cette pale unique formant une aube avec les parois 12 et 14. Autrement dit, l'invention est applicable à une aube ou à un secteur, c'est-à-dire à tout ensemble monobloc comportant des parois 12, 14 entre lesquelles s'étend(ent) une ou plusieurs pales 16.

## Revendications

1. Procédé de réalisation par fabrication additive d'au moins une aube de turbomachine d'aéronef, cette aube comportant deux parois circonférentielles, respectivement supérieure (12) et inférieure (14), entre lesquelles s'étendent au moins une pale (16) comportant chacune un bord d'attaque (18) et un bord de fuite (20) s'étendant entre lesdites parois et au moins en partie en retrait vis-à-vis respectivement de premiers et seconds bords circonférentiels desdites parois, le procédé comprenant :
- une étape de fabrication additive par fusion laser sur lit de poudre de ladite aube, la fabrication étant réalisée sur un plateau support (180) de sorte que lesdits premiers ou seconds bords circonférentiels soient fabriqués en premier directement sur ledit plateau support, au moins un organe (26) de soutien provisoire étant réalisé simultanément auxdits premiers ou seconds bords, au niveau de ladite ou de chaque pale, et s'étendant entre ledit plateau de support et ledit bords d'attaque ou de fuite de la pale, et
- une étape de retrait dudit ou de chaque organe de soutien en rompant sa liaison avec le bord d'attaque ou de fuite associé,
**caractérisé en ce que** le retrait est réalisé au moyen d'un outil (30) dont au moins une extrémité est engagée dans au moins un évidement (28) dudit ou de chaque organe de soutien, et qui est déplacé par pivotement dans un plan sensiblement perpendiculaire au bord d'attaque ou de fuite associé.

2. Procédé selon la revendication précédente, dans lequel il est appliqué à une série d'aubes appartenant à un même secteur (10) de distributeur ou de redresseur.

3. Procédé selon l'une des revendications précédentes, dans lequel ledit outil (30) est un tournevis, de préférence à extrémité ou tête plate.

4. Aube de turbomachine d'aéronef réalisée par le procédé selon l'une des revendications précédentes, ladite aube comportant deux parois circonférentielles, respectivement supérieure (12) et inférieure (14), entre lesquelles s'étendent au moins une pale (16) comportant chacune un bord d'attaque (18) et un bord de fuite (20) s'étendant entre lesdites parois et au moins en partie en retrait vis-à-vis respectivement de premiers et seconds bords circonférentiels desdites parois, au moins un organe (26) de soutien provisoire étant situé au niveau du bord d'attaque ou de fuite de ladite ou de chaque pale, et s'étendant entre un plan passant par lesdits premiers ou seconds bords et ledit bord d'attaque ou de fuite de ladite ou de chaque pale, **caractérisé en ce que** ledit ou chaque organe de soutien comporte au moins un évidement (28) configuré pour recevoir au moins une extrémité d'un outil (30), en vue du retrait par pivotement dudit organe.

5. Aube selon la revendication précédente, dans lequel le ou chaque évidement (28) est délimité par des parois transversales de renfort (26e).

6. Aube selon la revendication 4 ou 5, dans lequel chaque organe (26) a une épaisseur qui varie entre une extrémité située du côté de la paroi inférieure (14), et une extrémité opposée située du côté de la paroi supérieure (12).

7. Aube selon l'une des revendications 4 à 6, dans lequel chaque organe (26) comprend au moins une cavité d'allègement (32).

8. Aube selon la revendication précédente, dans lequel chaque cavité d'allègement (32) est délimitée par des parois latérales (26c) de l'organe qui comportent des encoches d'allègement (34).

9. Aube selon la revendication précédente, dans lequel lesdites encoches d'allègement (34) ont chacune une forme générale en V.

10. Secteur (10) de distributeur ou de redresseur, comportant une série d'aubes selon l'une des revendications 4 à 9, ledit secteur formant un ensemble monobloc.

## Patentansprüche

1. Verfahren zur Herstellung durch generative Fertigung mindestens einer Flugzeugturbomaschinenschaufel, wobei diese Schaufel zwei Umfangswände umfasst, jeweils eine obere (12) und eine untere (14), zwischen denen sich mindestens ein Blatt (16) erstreckt, umfassend jeweils eine Angriffskante (18) und eine Austrittskante (20), die sich zwischen den Wänden erstrecken und mindestens teilweise zurückgezogen gegenüber jeweils ersten und zweiten Umfangsrändern der Wände, wobei das Verfahren umfasst:
- einen Schritt des generativen Fertigens durch Laserfusion auf Pulverbett der Schaufel, wobei die Fertigung auf einer Stützplatte (180) erfolgt, so dass die ersten oder zweiten Umfangsränder zuerst direkt auf der Stützplatte gefertigt werden, wobei mindestens ein provisorisches Stützorgan (26) gleichzeitig mit den ersten oder zweiten Rändern an dem oder jedem Blatt hergestellt wird und sich zwischen der Stützplatte und der Angriffs- oder Austrittskante des Blatts erstreckt, und
- einen Schritt des Zurückziehens des oder jedes Stützorgans, indem seine Verbindung zwischen der assoziierten Angriffs- oder Austrittskante gebrochen wird,
**dadurch gekennzeichnet, dass** das Zurückziehen mit Hilfe eines Werkzeugs (30) erfolgt, von dem mindestens ein Ende in mindestens eine Aussparung (28) des oder jedes Stützorgans eingegriffen ist, und das durch Schwenken auf einer im Wesentlichen senkrechten Ebene zur assoziierten Angriffs- oder Austrittskante verschoben wird.

2. Verfahren nach dem vorstehenden Anspruch, wobei es auf eine Reihe von Schaufeln angewendet wird, die zu einem gleichen Verteiler- oder Gleichrichtersektor (10) gehören.

3. Verfahren nach einem der vorstehenden Ansprüche, wobei das Werkzeug (30) ein Schraubenzieher ist, vorzugsweise mit flachem Ende oder Kopf.

4. Flugzeugturbomaschinenschaufel, hergestellt durch das Verfahren nach einem der vorstehenden Ansprüche, wobei die Schaufel zwei Umfangswände umfasst, jeweils eine obere (12) und eine untere (14), zwischen denen sich mindestens ein Blatt (16) erstreckt, umfassend jeweils eine Angriffskante (18) und eine Austrittskante (20), die sich zwischen den Wänden erstrecken und mindestens teilweise zurückgezogen gegenüber jeweils ersten und zweiten Umfangsrändern der Wände, wobei sich mindestens ein provisorisches Stützorgan (26) an der Angriffs- oder Austrittskante des oder jedes Blatts befindet und sich zwischen einer Ebene, die durch die ersten oder zweiten Ränder verläuft, und der Angriffs- oder Austrittskante des oder jedes Blatts erstreckt, **dadurch gekennzeichnet, dass** das oder jedes Stützorgan mindestens eine Aussparung (28) umfasst, die konfiguriert ist, um mindestens ein Ende eines Werkzeugs (30) zum Zurückziehen durch Schwenken des Organs aufzunehmen.

5. Schaufel nach dem vorstehenden Anspruch, wobei die oder jede Aussparung (28) durch querliegende Verstärkungswände (26e) begrenzt ist.

6. Schaufel nach Anspruch 4 oder 5, wobei jedes Organ (26) eine Dicke aufweist, die zwischen einem Ende, das sich auf der Seite der unteren Wand (14) befindet, und einem gegenüberliegenden Ende, das sich auf der Seite der oberen Wand (12) befindet, variiert.

7. Schaufel nach einem der Ansprüche 4 bis 6, wobei jedes Organ (26) mindestens einen Entlastungshohlraum (32) umfasst.

8. Schaufel nach dem vorstehenden Anspruch, wobei jeder Entlastungshohlraum (32) durch seitliche Wände (26c) des Organs, die Entlastungsnuten (34) umfassen, begrenzt ist.

9. Schaufel nach dem vorstehenden Anspruch, wobei die Entlastungsnuten (34) jeweils im Allgemeinen V-förmig sind.

10. Verteiler- oder Gleichrichtersektor (10), umfassend eine Reihe von Schaufeln nach einem der Ansprüche 4 bis 9, wobei der Sektor eine Monoblockanordnung bildet.

## Claims

1. Method of creating at least one aircraft turbomachine vane using additive manufacturing, this vane comprising two circumferential walls, respectively upper (12) and lower (14), between which extend at least one vane (16) comprising each a leading edge (18) and a trailing edge (20) extending between said walls and at least partially retracted with respect to first and second circumferential edges of said walls, respectively, the method comprising:
- an additive manufacturing step by laser fusion on a powder bed of said vane, the manufacturing being carried out on a support plate (180) so that said first or second circumferential edges are manufactured first directly on said support plate, at least one temporary support member (26) being produced simultaneously with said first or second edges, at the level of said or each vane, and extending between said support plate and said leading or trailing edges of the vane, and
- a step of removing said or each support member by breaking its connection with the associated leading or trailing edge,
**characterized in that** the removing is carried out by means of a tool (30), at least one end of which is engaged in at least one recess (28) of said or each support member, and which is moved by pivoting in a plane substantially perpendicular to the associated leading or trailing edge.

2. The method according to the preceding claim, wherein it is applied to a series of vanes belonging to the same distributor or rectifier sector (10).

3. The method according to any of the preceding claims, wherein said tool (30) is a screwdriver, preferably with a flat end or head.

4. An aircraft turbomachine vane produced by the method according to any of the preceding claims, said vane comprising two circumferential walls, respectively upper (12) and lower (14), between which extend at least one vane (16) comprising each a leading edge (18) and a trailing edge (20) extending between said walls and at least partially retracted with respect to first and second circumferential edges of said walls, respectively, at least one temporary support member (26) being located at the level of the leading or trailing edge of said or each vane, and extending between a plane passing through said first or second edges and said leading or trailing edge of said or each vane, **characterized in that** said or each support member comprises at least one recess (28) configured to receive at least one end of a tool (30), for the pivoting removal of said member.

5. The vane according to the preceding claim, wherein the or each recess (28) is delimited by transverse reinforcing walls (26e).

6. The vane according to claim 4 or 5, wherein each member (26) has a thickness that varies between an end located on the side of the lower wall (14), and an opposite end located on the side of the upper wall (12).

7. The vane according to one of claims 4 to 6, wherein each member (26) comprises at least one lightening cavity (32).

8. The vane according to the preceding claim, wherein each lightening cavity (32) is delimited by side walls (26c) of the member which comprise lightening notches (34).

9. The vane according to the preceding claim, wherein said lightening notches (34) each have a general V-shape.

10. A distributor or rectifier sector (10), comprising a series of vanes according to one of claims 4 to 9, said sector forming a monoblock assembly.
